# FASCICULE DE BREVET EUROPEEN

(11) **EP 2 760 794 B1**
(45) Date de publication et mention de la délivrance du brevet: **18.11.2015**
(21) Numéro de dépôt: 12762016.9
(22) Date de dépôt: 25.09.2012
(51) Int. Cl.: C01G 43/01, C01G 43/025, C01G 56/00, C01F 17/00, G21C 19/48, G21F 9/30

(54) **PROCEDE DE PREPARATION D'UN OXYCHLORURE ET/OU OXYDE D ' ACTINIDE ( S ) ET/OU DE LANTHANIDE (S) A PARTIR D'UN MILIEU COMPRENANT AU MOINS UN SEL FONDU**
VERFAHREN ZUR HERSTELLUNG EINES OXICHLORIDS UND/ODER OXIDS AUS AKTINIDEN UND/ODER LANTHANIDEN AUS EINEM MEDIUM MIT MINDESTENS EINEM GESCHMOLZENEN SALZ
PROCESS FOR PREPARING AN OXYCHLORIDE AND/OR OXIDE OF ACTINIDE(S) AND/OR OF LANTHANIDE(S) FROM A MEDIUM COMPRISING AT LEAST ONE MOLTEN SALT

(30) Priorité: 26.09.2011 FR 1158572
(43) Date de publication de la demande: 06.08.2014
(73) Titulaire: Commissariat à l'Énergie Atomique et aux Énergies Alternatives, 75015 Paris (FR)
(72) Inventeur: LAPLACE, Annabelle, F-84000 Avignon (FR); VIGIER, Jean-François, F-40180 Saint Pandelon (FR); PLET, Thierry, F-84100 Orange (FR); RENARD, Catherine, F-59790 Ronchin (FR); ABRAHAM, Francis, F-59242 Genech (FR); SLIM, Cyrine, F-75018 Paris (FR); DELPECH, Sylvie, F-91300 Massy (FR); PICARD, Gérard, F-94120 Fontenay Sous Bois (FR)
(74) Mandataire: Ahner, Philippe
(86) Numéro de dépôt international: PCT/EP2012/068881
(87) Numéro de publication internationale: WO 2013/045450

(56) Documents cités:
- BE-A- 665 647
- FR-A- 1 589 028
- US-A- 3 063 794
- US-A- 3 117 836

## Description

### DOMAINE TECHNIQUE

L'invention a trait à un procédé de préparation d'un oxyhalogénure et/ou oxyde d'actinide(s) et/ou de lanthanide(s) à partir d'un milieu comprenant au moins un sel fondu, ledit oxyhalogénure étant un oxychlorure et le sel fondu étant un sel fondu, du type chlorure.

Ce procédé peut s'inscrire dans le cadre du retraitement des combustibles nucléaires irradiés et peut, notamment trouver application dans la conception de combustibles nucléaires à base d'actinide(s), lesquels sont destinés à entrer dans la constitution de crayons nucléaires pour réacteur nucléaire ou encore dans la conception de cibles de transmutation utilisées pour effectuer des expériences de transmutation nucléaire, notamment en vue de mieux comprendre le mécanisme de transmutation de certains éléments actinides, tels que les actinides mineurs.

On précise, pour la suite de l'exposé, que par actinide mineur, on entend les éléments actinides autres que l'uranium, le plutonium et le thorium, formés dans les réacteurs nucléaires par captures successives de neutrons par les noyaux de combustible standard, les actinides mineurs étant l'américium, le curium et le neptunium.

### ÉTAT DE LA TECHNIQUE ANTÉRIEURE

A ce jour, tous les schémas de retraitement des combustibles irradiés exploités commercialement sont fondés sur le procédé hydrométallurgique PUREX (acronyme correspondant à « Plutonium Uranium Refining by Extraction »). Dans ce procédé, le combustible irradié est tout d'abord dissous dans de l'acide nitrique. La solution résultante est ensuite mise en contact avec un solvant organique (par exemple, le tributylphosphate) faisant office d'extractant non miscible avec l'acide nitrique moyennant quoi l'on récupère à l'issue de ce procédé deux phases :
- une phase organique comprenant l'uranium et le plutonium ; et
- une phase aqueuse comprenant les actinides mineurs (tels que l'américium et le curium) et les produits de fission, laquelle est appelée également « raffinat PUREX ».

La phase organique comprenant l'uranium et le plutonium subit une étape d'extraction, de sorte à isoler l'uranium du plutonium, lesquels pourront être réutilisés pour réaliser des combustibles à base d'uranium et/ou de plutonium.

Le procédé PUREX mis au point durant la deuxième guerre mondiale est maintenant mis en oeuvre dans des usines commerciales de grande capacité, présentant typiquement un débit de retraitement de l'ordre de 1000 t/an. Il a bénéficié notamment de nombreux perfectionnements, qui en ont fait un procédé fiable, robuste et produisant peu de déchets secondaires.

Le procédé PUREX présente toutefois les limitations suivantes:
- il est souvent considéré comme potentiellement proliférant, car il permet d'obtenir après l'extraction de la phase organique un flux de plutonium pur ;
- le solvant organique utilisé comme extractant est sensible à l'irradiation, ce qui impose pour les combustibles à forts taux de combustion, des temps de refroidissement longs avant retraitement ;
- enfin, pour être soumis à un retraitement, le combustible doit être dissous préalablement dans de l'acide nitrique, ce qui pose un problème dans le cas des combustibles réfractaires non solubles dans l'acide nitrique.

De façon alternative, il a été proposé des procédés pyrochimiques de retraitement des combustibles nucléaires irradiés mettant en oeuvre des techniques séparatives à haute température en milieu comprenant au moins un sel fondu (principalement, des milieux chlorures fondus ou fluorures fondus). Ils ont été intensivement étudiés dans les années 70, soit pour le retraitement des combustibles usés issus des réacteurs classiques, soit pour le retraitement en ligne du combustible d'un réacteur à sel fondu. En effet, les sels fondus (généralement sous forme de chlorures ou de fluorures alcalins) peuvent dissoudre assez facilement les combustibles, les cibles dédiées et matrices réfractaires envisagées pour les réacteurs du futur. Ils mettent en oeuvre des réactifs insensibles à l'irradiation et transparents aux neutrons ce qui permet de retraiter des combustibles à fort taux de combustion peu refroidis, sans contraintes de criticité. Enfin, ils ne permettent pas d'obtenir directement un flux de plutonium pur.

Une fois les éléments actinides récupérés, ils peuvent être utilisés de nouveau pour être transformés en oxydes, de sorte à former un combustible neuf, cette transformation pouvant passer par une étape de précipitation dans un milieu comprenant un sel fondu, en particulier un milieu comprenant un sel chlorure fondu.

La précipitation peut être induite par une technique impliquant l'ajout d'ions oxyde (O²⁻) au milieu comprenant un sel fondu par l'intermédiaire de réactifs tels que Li₂CO₃ ou BaO.

Lorsque le réactif est à base d'ions carbonate, les ions O²⁻ sont issus de la réaction de dissociation suivante :

CO₃²⁻ ↔ CO₂(g) + O²⁻

Les ions O²⁻ réagissent ensuite avec un chlorure d'actinide ou lanthanide, ce qui conduit, lorsqu'il s'agit du trichlorure de plutonium, à la réaction suivante :

2 PuCl₃ + 6Li⁺ + 3O²⁻ → Pu₂O₃ + 6LiCl

Néanmoins, cette technique induit :
- d'une part, une modification du milieu comprenant un sel fondu (notamment lorsque le réactif utilisé est BaO) et d'autre part, une augmentation du volume de ce milieu, ce qui a pour conséquence d'augmenter le volume de déchets à traiter et ainsi des difficultés de gestion de ces déchets, ce d'autant plus qu'ils sont non vitrifiables ;
- une production de dioxyde de carbone (notamment lorsque le réactif utilisé est un réactif carbonate), ce qui peut conduire à un phénomène de moussage non désiré.

La précipitation peut être également induite par l'ajout au milieu comprenant un sel fondu de dioxygène gazeux, qui génère, lorsque le milieu comprenant un sel fondu contient des chlorures de lanthanide(s) ou actinide(s), un précipité d'oxyde ou d'oxychlorure de lanthanide(s) ou actinide(s), l'oxychlorure, le cas échéant pouvant être amené à subir une étape de calcination sous air afin de le convertir en un oxyde.

A titre d'exemple, lorsque le milieu comprenant un sel fondu comprend du trichlorure de lanthane, la réaction de précipitation peut être formalisée par l'équation chimique suivante :

LaCl₃ + (1/2) O₂ (g) → LaOCl + Cl₂ (g)

l'oxychlorure de lanthane pouvant être calciné sous air à plus de 1000°C, afin d'obtenir l'oxyde La₂O₃.

Lorsque le milieu comprenant un sel fondu comprend du trichlorure de cerium CeCl₃, l'oxyde CeO₂ est obtenu directement à l'issue de la réaction de précipitation.

Néanmoins, dans le cas des actinides, et en particulier, de l'uranium et du neptunium, cela conduit à la formation d'une part d'oxychlorures d'uranium et de neptunium, qui sont solubles et, de ce fait, ne forment pas de précipité et, d'autre part, à des précipités incluant des cations du solvant (tel que des uranates).

Le document US 3 053 794 A décrit un procédé de préparation d'un oxyde de uranium et/ou de thorium à partir d'un fluorure dans un sel fondu.

D'autres techniques de précipitation ont été abordées, telles que la précipitation à l'acide borique (H₃BO₃) ou au phosphate de lithium (Li₃PO₄), avec respectivement les inconvénients suivants :
- la formation d'oxydes comprenant du bore et nécessitant l'utilisation d'un excès d'acide borique, ce qui pollue substantiellement le milieu comprenant un sel fondu ;
- la formation de phase du type phosphate et non du type oxyde.

Au vu de ce qui existe déjà, les inventeurs se sont proposé de mettre au point un nouveau procédé de fabrication d'un oxyhalogénure, tel qu'un oxychlorure, et/ou oxyde d'actinide(s) et/ou de lanthanide(s) en milieu comprenant un sel fondu, qui ne présente pas les inconvénients suivants :
- la pollution par des cations du milieu comprenant un sel fondu, induisant ainsi, de façon subséquente, des problèmes de gestion du milieu comprenant un sel fondu ;
- la formation avec les éléments actinides ou lanthanides de produits autres que des oxyhalogénures ou des oxydes.

### EXPOSÉ DE L'INVENTION

Pour ce faire, les auteurs de la présente invention proposent un nouveau procédé de fabrication d'un oxychlorure, et/ou oxyde d'actinide(s) et/ou de lanthanide(s) à partir d'un chlorure d'actinide(s) et/ou de lanthanide(s) présent dans un milieu comprenant au moins un sel fondu, ledit procédé comprenant une étape de mise en contact dudit halogénure d'actinide(s) et/ou de lanthanide(s) présent dans ledit milieu comprenant au moins un sel fondu avec un gaz neutre humide, ledit halogénure d'actinide(s) et/ou de lanthanide(s) étant un chlorure d'actinide(s) et/ou de lanthanide(s) et ledit au moins un sel fondu étant un sel du type chlorure.

Avant d'entrer plus en détail dans l'exposé de l'invention, nous précisons les définitions suivantes.

Par milieu comprenant au moins un sel fondu, on entend un liquide anhydre résultant de la fusion d'au moins un sel, tel qu'un sel alcalin.

Par gaz neutre humide, on entend un gaz neutre (c'est-à-dire un gaz inerte, ou, en d'autres termes, un gaz qui ne réagit pas avec les éléments avec lesquels il est en contact) chargé en vapeur d'eau.

Par oxyhalogénure d'actinide(s) et/ou de lanthanide(s), on entend un composé inorganique résultant de la combinaison d'au moins un élément actinide et/ou d'au moins un élément lanthanide avec un halogène, tel que le chlore, et de l'oxygène.

Par oxyde d'actinide(s) et/ou de lanthanide(s), on entend un composé inorganique résultant de la combinaison d'au moins un élément actinide et/ou d'au moins un élément lanthanide avec de l'oxygène.

Par halogénure d'actinide(s) et/ou de lanthanide(s), on entend un composé inorganique résultant de la combinaison d'au moins un élément actinide et/ou d'au moins un élément lanthanide avec un élément halogène, tel que le chlore.

Selon l'invention, pour aboutir à la fabrication d'un oxychlorure, et/ou oxyde d'actinide(s) et/ou de lanthanide(s), il est procédé à la mise en contact d'un chlorure d' actinide (s) et/ou de lanthanide (s) présent dans un milieu comprenant un sel fondu avec un gaz neutre humide, ce dernier engendrant la précipitation de l' oxychlorure et/ou oxyde d'actinide(s) et/ou de lanthanide(s).

Le milieu comprenant au moins un sel fondu peut comprendre au moins un sel du type halogénure, tel qu'un halogénure de métal alcalin, un halogénure de métal alcalino-terreux et les mélanges de ceux-ci.

Plus particulièrement, le sel du type halogénure est un sel chlorure, tel qu'un chlorure de métal alcalin, un chlorure de métal alcalino-terreux et les mélanges de ceux-ci.

A titre d'exemples de chlorures de métal alcalin, on peut citer le chlorure de sodium, le chlorure de lithium, le chlorure de potassium et les mélanges de ceux-ci.

A titre d'exemple de chlorure de métal alcalino-terreux, on peut citer le chlorure de calcium.

Il peut s'agir notamment d'un mélange comprenant un chlorure de métal alcalin et un chlorure de métal alcalino-terreux, tel qu'un mélange de chlorure de lithium et de chlorure de calcium.

Le gaz neutre peut être un gaz rare, c'est-à-dire un gaz constitué d'un élément choisi parmi l'hélium, le néon, l'argon, le krypton, le xénon et le radon, la préférence allant à l'argon. Les gaz rares sont particulièrement avantageux, en ce sens qu'ils ne se dissolvent pas dans le milieu comprenant au moins un sel fondu, et n'apportent, de ce fait, pas de nouveaux éléments dans ce milieu, ce qui n'entraîne pas d'augmentation de volume de ce milieu. Il s'entend qu'au sens de l'invention, ce gaz rare sera chargé en vapeur d'eau.

Le gaz neutre peut être également un gaz, tel que l'azote N₂.

L'homme du métier choisira, de manière appropriée, la teneur en vapeur d'eau contenue dans le gaz neutre ainsi que le débit avec lequel il est mis en contact avec le milieu comprenant un sel fondu, de sorte à induire la formation de l' oxychlorure, et/ou de l'oxyde d'actinide(s) et/ou de lanthanide(s).

L'halogénure d'actinide(s) et/ou de lanthanide(s) est un chlorure d'actinide(s) et/ou de lanthanide(s), ces chlorures d'actinide(s) et/ou de lanthanide(s) pouvant être issus de flux de retraitement de combustibles usés. Plus spécifiquement, l'halogénure d'actinide(s) et/ou de lanthanides est un chlorure d'actinide(s) (III) et/ou de lanthanide(s) (III) (III indiquant le degré d'oxydation du ou desdits actinides et du ou desdits lanthanides).

L'halogénure d' actinide (s) et/ou de lanthanide(s) est un chlorure d'actinide(s) et/ou de lanthanide(s) et le ou les sels fondus sont des sels chlorures. Ainsi, la mise en contact dudit chlorure d'actinide(s) et/ou de lanthanide(s) avec le ou les sels chlorures n'engendre pas de modification de nature du ou des sels fondus par échange ionique, comme cela est le cas, lorsque l'halogénure d'actinide(s) et/ou de lanthanide(s) est un fluorure d'actinide(s) et/ou de lanthanide(s) et le ou les sels fondus sont des sels chlorures. Ceci peut ainsi faciliter grandement le recyclage du ou des sels fondus après leur utilisation dans le cadre du procédé de l'invention, qui peut ainsi s'intégrer dans le cycle de retraitement complet d'un combustible nucléaire.

Les éléments actinides incorporés dans le chlorure d'actinide(s) et à l'issue du procédé de l'invention dans l'oxychlorure et/ou oxyde d'actinide(s) peuvent être n'importe quel élément actinide de la classification périodique et, en particulier, les éléments actinides uranium, plutonium et/ou thorium et les actinides mineurs, tels que l'américium, le curium et le neptunium, et les mélanges de ceux-ci.

Les éléments lanthanides incorporés dans le chlorure de lanthanide(s) et à l'issue du procédé de l'invention dans l'oxychlorure ou oxyde de lanthanide(s) peuvent être n'importe quel élément lanthanide de la classification périodique et en particulier, le cérium et le néodyme.

L'étape de mise en contact peut être réalisée classiquement par barbotage du gaz neutre humide dans le milieu comprenant au moins un sel fondu, dans lequel est inclus un chlorure d'actinide(s) et/ou de lanthanide(s).

D'un point de vue concret, la formation de l'oxyhalogénure et/ou de l'oxyde d'actinide(s) et/ou de lanthanide(s) se traduit par un phénomène de précipitation résultant de l'étape de mise en contact susmentionnée. Avantageusement, il y a formation quantitative d'oxyde d'actinide(s) et/ou de lanthanide(s), cette formation s'accompagnant, classiquement, d'une augmentation du degré d'oxydation de l'élément actinide et/ou de l'élément lanthanide (par exemple, passage d'un degré d'oxydation (III) à un degré d'oxydation (IV)).

Sans être lié par la théorie, la réaction de précipitation peut s'expliquer par la réaction de la vapeur d'eau contenue dans le gaz neutre humide avec les anions contenus dans le milieu comprenant au moins un sel fondu pour former des ions oxydes O²⁻, lesquels vont réagir avec le chlorure d' actinide (s) et/ou de lanthanide(s) pour former, par précipitation, un oxychlorure et/ou un oxyde d'actinide(s) et/ou de lanthanide(s).

A titre d'exemple, lorsque l'halogénure d'actinide(s) et/ou de lanthanide(s) est un trichlorure de formule AnCl₃ (An représentant un élément actinide), la formation d'oxychlorure (de formule AnOCl) et/ou d'oxyde d'actinide (de formules An₂O₃ ou AnO₂) peut être symbolisée par les réactions globales suivantes :

2AnCl₃ + 3H₂O_{(g)} → An₂O₃ + 6HCl_{(g)}

AnCl₃ + 2H₂O_{(g)} → AnO₂ + 3HCl_{(g)} + (1/2)H_{2(g)}

AnCl₃ + H₂O_{(g)} → AnOCl + 2HCl_{(g)}

Avant l'étape de mise en contact susmentionnée, le procédé de l'invention peut comprendre une étape de préparation du milieu comprenant au moins un sel fondu, dans lequel est présent un chlorure d'actinide(s) et/ou de lanthanide(s).

Cette étape de préparation peut être mise en oeuvre selon différentes variantes.

Selon une première variante, l'étape de préparation susmentionnée peut comprendre les opérations suivantes :
- une opération de mélange, à l'état solide, du ou des sels constitutifs du milieu et de l'halogénure d'actinide(s) et/ou de lanthanide(s) ;
- une opération de chauffage dudit mélange obtenu à une température appropriée pour obtenir la fusion de ce mélange.

Selon une deuxième variante, l'étape de préparation susmentionnée peut comprendre les opérations suivantes :
- une opération de mélange, à l'état solide, du ou des sels constitutifs du milieu autres que l'halogénure d'actinide(s) et/ou de lanthanide(s) ;
- une opération de chauffage dudit mélange obtenu à une température appropriée pour obtenir la fusion de ce mélange (dit ci-après « mélange fondu ») ;
- une opération d'incorporation au mélange fondu de l'halogénure d'actinide(s) et/ou de lanthanide(s).

Que ce soit pour la première variante ou la deuxième variante, il peut être procédé à une opération de déshydratation des sels avant l'opération de chauffage.

Classiquement, quelle que soit la variante de réalisation, l'étape de préparation du milieu peut être mise en oeuvre dans un creuset en un matériau inerte dans les conditions opératoires de cette étape, ce matériau pouvant être un matériau céramique (tel que l'alumine) ou un matériau carboné, tel que du carbone vitreux.

Avant l'étape de mise en contact susmentionnée, le procédé de l'invention peut comprendre, également, une étape de préparation du gaz neutre humide, par exemple, par barbotage d'un gaz neutre dans un barboteur comprenant de l'eau et une sortie permettant la diffusion du gaz neutre chargé en vapeur d'eau.

Une fois la précipitation effectuée suite à l'étape de mise en contact, le procédé de l'invention peut comprendre une étape d'isolement de l'oxychlorure et/ou oxyde formé, cette étape d'isolement pouvant consister à simplement filtrer le milieu résultant de l'étape de mise en contact pour récupérer le précipité.

A l'issue de cette étape d'isolement, le milieu comprenant au moins un sel fondu peut être amené à subir une étape de recyclage, par exemple, par distillation.

Comme il ressort des réactions globales illustrées ci-dessus, l'étape de mise en contact peut se caractériser, outre la formation d'oxyhalogénure(s) et/ou d'oxyde(s) d'actinide(s) ou de lanthanide(s) par la formation concomitante d'acide chlorhydrique, cet acide chlorhydrique pouvant être neutralisé lors d'une étape de neutralisation subséquente à l'étape de mise en contact, cette étape de neutralisation pouvant consister à ajouter une base en aval du réacteur, où a eu lieu l'étape de mise en contact (par exemple, en plaçant un barboteur rempli de soude en aval du réacteur).

Dans ce procédé, lorsque l'on souhaite obtenir exclusivement des oxydes d'actinide(s) et/ou de lanthanide(s) et que le produit obtenu à l'issue de l'étape de mise en contact contient des oxychlorures d'actinide(s) et/ou de lanthanide(s) le procédé de l'invention peut comprendre alors une étape de calcination sous air du précipité obtenu, de sorte à transformer les oxychlorures en oxyde (s) d'actinide(s) et/ou lanthanide(s).

Le produit obtenu conformément à l'invention comprenant des oxydes et/ou oxychlorures d'actinide(s) et/ou lanthanide(s) peut se présenter, lorsqu'il y a présence simultanée d'actinide(s) et/ou lanthanide(s), sous forme d'une solution solide, c'est-à-dire un mélange par dissolution d'actinide(s) et/ou de lanthanide(s) dans un réseau cristallin du type oxyde ou oxyhalogénure.

Il s'entend que, pour pouvoir parler de solution solide, il faut qu'il y ait forcément plus d'un élément actinide et/ou lanthanide distinct l'un de l'autre.

Ainsi, l'on parle de solution solide dans les cas suivants où :
- plusieurs éléments actinides distincts sont présents dans le réseau cristallin oxyde ou oxyhalogénure ;
- plusieurs éléments lanthanides distincts sont présents dans le réseau cristallin oxyde ou oxyhalogénure ;
- un élément actinide et un élément lanthanide sont présents dans le réseau cristallin oxyde ou oxyhalogénure ;
- un élément actinide et plusieurs éléments lanthanides sont présents dans le réseau cristallin oxyde ou oxyhalogénure ; ou
- plusieurs éléments actinides et un élément lanthanide sont présents dans le réseau cristallin oxyde ou oxyhalogénure.

La présente invention peut être mise en oeuvre dans un réacteur comportant un creuset, éventuellement amovible, le creuset servant de réceptacle au milieu comprenant au moins un sel fondu, ledit réacteur pouvant être placé dans un four permettant l'apport de chaleur nécessaire pour engendrer une fusion de sels, lorsque le procédé de l'invention comporte une étape de préparation du milieu comprenant au moins un sel fondu.

Le procédé de l'invention est particulièrement adapté à la préparation de combustibles nucléaires appartenant à la catégorie des oxydes mixtes, telles que les oxydes du type MOX (U, Pu) O₂ et (U, Pu, Am)O₂ à partir de chlorures d'actinides recyclés.

D'autres caractéristiques apparaîtront mieux à la lecture du complément de description qui suit, lequel se rapporte à des exemples de fabrication d'un combustible conforme à l'invention.

Bien entendu, les exemples qui suivent ne sont donnés qu'à titre d'illustration de l'objet de l'invention et ne constituent, en aucun cas, une limitation de cet objet.

### EXPOSÉ DÉTAILLÉ DE MODES DE RÉALISATION PARTICULIERS

### EXEMPLE 1

Cet exemple illustre la coprécipitation de cérium (III) et de néodyme (III) sous la forme d'une solution solide, le cérium (III) et le néodyme (III) constituant des éléments simulants des éléments actinides (III).

Cet exemple est mis en oeuvre dans un réacteur en quartz inerte sous atmosphère d'argon sec comprenant un creuset amovible en alumine ou carbone vitreux, ce réacteur étant lui-même dans un four tubulaire vertical, qui va apporter l'énergie nécessaire à la fusion des sels destinés à entrer dans la constitution du milieu comprenant un sel fondu. L'argon humide, réactif nécessaire à la précipitation de ladite solution solide est produit par barbotage d'argon dans un bulleur en téflon (1L) muni d'un diffuseur en téflon (pour la diffusion de l'argon) et comprenant une hauteur d'eau de 70 mm. La pression partielle d'eau dans l'argon peut être contrôlée par la température de l'eau, fixant ainsi sa pression de vapeur saturante.

Dans le creuset susmentionné, on ajoute un mélange de LiCl (2,32 g ; 0,055 mol), de CaCl₂ (14,18 g ; 0,128 mol), de CeCl₃ (1,73 g ; 7,0 mmol) et de NdCl₃ (1, 76 g ; 7, 0 mmol). Le creuset est ensuite placé dans le réacteur en quartz placé dans le four tubulaire vertical. Le mélange est déshydraté par application d'un vide dans le réacteur et augmentation de la température à raison de 2°C/min jusqu'à 150°C, le vide et la température de 150°C étant maintenus pendant 6 heures. A l'issue de ce traitement, le réacteur est mis sous flux d'argon sec pendant une nuit. La température du réacteur est ensuite portée à 705°C, de sorte à provoquer la fusion du mélange, formant ainsi un milieu comprenant un sel fondu. Dans ce milieu, on procède au barbotage d'argon humide à raison de 2 L/h pendant 8 heures au moyen d'un tube en alumine plongeant dans le milieu (l'argon humide étant de l'argon saturé en vapeur d'eau à température ambiante), moyennant quoi il se forme un précipité. A l'issue de la réaction de précipitation, le creuset est ramené à température ambiante avec flux d'argon sec, puis le précipité est récupéré par dissolution du milieu comprenant un sel précédemment fondu dans l'eau suivie d'une filtration. L'analyse ICP-AES des eaux de lavage a permis d'estimer un taux de précipitation du néodyme et du cérium de l'ordre de 99,9% pour ces deux éléments, ce qui correspond à un rendement de précipitation quasi quantitatif.

Le précipité isolé a ensuite été analysé par différentes techniques :
- la diffraction aux rayons X (symbolisée ci-après par l'abréviation « DRX ») ;
- la microscopie électronique à balayage (symbolisée ci-après par l'abréviation « MEB ») ;
- l'analyse par microsonde de Castaing ; et
- l'analyse thermogravimétrique.

Le diagramme obtenu par DRX indique que le précipité obtenu est un produit composé majoritairement d'oxychlorure mixte (Ce,Nd)OCl. Le paramètre de maille intermédiaire de cet oxychlorure avec ceux de l'oxychlorure de néodyme seul et de l'oxychlorure de cérium seul indique la formation d'une solution solide de ces deux éléments. Le précipité contient également une faible proportion d'oxyde mixte de cérium et de néodyme riche en cérium de formule Ce_{0,8}Nd_{0,2}O_{1,9}, ce qui atteste de l'oxydation d'une partie du cérium (III) en cérium (IV). La dissolution sélective de l'oxychlorure dans de l'acide chlorhydrique (0,1 mol/L) permet d'estimer la présence de Ce_{0,8}Nd_{0,2}O_{1,9} à raison de 10% massiques.

La microscopie électronique à balayage atteste de la présence d'oxychlorure (Ce,Nd)OCl, qui se présente sous forme de plaquettes et de Ce_{0,8}Nd_{0,2}O_{1,9}, qui se présente sous forme de cubes.

L'analyse par microsonde de Castaing permet, après introduction du précipité dans une résine suivie d'un polissage de celle-ci, de réaliser la cartographie d'une coupe de grains. Cette cartographie confirme la formation d'oxychlorure mixte (Ce,Nd)OCl avec la présence, dans un même grain, de cérium, de néodyme et de chlore. La présence d'oxyde Ce_{0,8}Nd_{0,2}O_{1,9} est également confirmée par la forte concentration en cérium, la faible concentration en néodyme et l'absence de chlore.

L'analyse thermogravimétrique a permis d'observer une perte de masse de l'ordre de 12% au cours de l'application d'un cycle thermique de 5°C/min jusqu'à l'obtention d'une température de 1300°C, attestant de la transformation de l'oxychlorure mixte (Ce, Nd) OCl en oxyde mixte Ce_{0,5}Nd_{0,5}O_{1,75}, cette transformation pouvant être illustrée par l'équation chimique suivante :

Ce_{0,5}Nd_{0,5}OCl + (3/8)O₂ → Ce_{0,5}Nd_{0,5}O_{1,75} + (1/2)Cl₂(g)

La formation de Ce_{0,5}Nd_{0,5}O_{1,75} est également confirmée par DRX.

### EXEMPLE 2

Cet exemple illustre la précipitation d'uranium (III) sous la forme d'oxyde d'uranium UO₂.

Il est mis en oeuvre dans le même réacteur que celui mentionné dans l'exemple 1.

Dans le creuset susmentionné, on ajoute un mélange de LiCl (2,61 g ; 0,062 mol) et de CaCl₂ (15,94 g ; 0,144 mol). Le creuset est ensuite placé dans le réacteur en quartz placé dans le four tubulaire vertical. Le mélange est déshydraté par application d'un vide dans le réacteur et augmentation de la température à raison de 5°C/min jusqu'à 300°C, le vide et la température de 300°C étant maintenus pendant 1 heure. A l'issue de ce traitement, le réacteur est mis sous flux d'argon sec pendant une nuit. La température du réacteur est ensuite portée à 705°C, de sorte à provoquer la fusion du mélange, formant ainsi un milieu comprenant un sel fondu. Du chlorure d'uranium UCl₃ (1,45 g ; 4,2 mmol) est introduit dans le milieu comprenant un sel fondu *via* un sas suivi d'un barbotage d'argon sec pendant une heure pour réaliser une homogénéisation du milieu. On procède, ensuite, au barbotage d'argon humide à raison de 4 L/h pendant 5 heures au moyen d'un tube en carbone vitreux plongeant dans le milieu (l'argon humide étant de l'argon saturé en vapeur d'eau à température ambiante), moyennant quoi il se forme un précipité. A l'issue de la réaction de précipitation, le creuset est ramené à température ambiante avec flux d'argon sec, puis le précipité est récupéré par dissolution du milieu comprenant un sel précédemment fondu dans l'eau suivie d'une filtration. L'analyse ICP-AES des eaux de lavage a permis d'estimer un taux de précipitation de l'uranium présent dans le sel de l'ordre de 99,9%. 75% de l'uranium introduit sont récupérés dans le précipité en raison d'une volatilisation d'une partie de cet uranium, qui se condense sur les parois de ce réacteur.

Le précipité isolé a ensuite été analysé par différentes techniques :
- la diffraction aux rayons X (symbolisée ci-après par l'abréviation « DRX ») ; et
- l'analyse thermogravimétrique.

Le diagramme obtenu par DRX indique que le précipité obtenu est composé exclusivement d'oxyde d'uranium UO₂.

L'analyse thermogravimétrique a permis d'observer un gain de masse de l'ordre de 4% au cours de l'application d'un cycle thermique de 5°C/min jusqu'à l'obtention d'une température de 800°C, attestant de la transformation de l'oxyde d'uranium UO₂ en U₃O₈, la présence de U₃O₈ étant confirmé par analyse DRX.

### EXEMPLE 3

Cet exemple illustre la précipitation de plutonium (III) sous la forme d'oxyde de plutonium PuO₂.

Il est mis en oeuvre dans le même réacteur que celui mentionné dans l'exemple 1.

Dans un creuset en carbone vitreux, on ajoute un mélange de LiCl (6,06 g ; 0,143 mol) et de CaCl₂ (36,94 g ; 0,333 mol), préalablement déshydratés à 250°C sous vide. Le creuset est ensuite placé dans le réacteur en quartz placé dans le four tubulaire vertical. Le mélange est fondu à 710°C et déshydraté par bullage de HCl(g) à raison d'un débit de 2 L/h dans le mélange fondu, avant d'être refroidi sous argon sec.

Le mélange salin ainsi obtenu est ensuite transféré via une boîte à gants dans un creuset en carbone vitreux. De l'oxyde de plutonium PuO₂ (0,4569 g ; 1,69*10⁻³ mol) est ajouté à hauteur de 1% massique et le creuset est introduit dans un réacteur en quartz similaire à celui utilisé précédemment. Le mélange est fondu à 710°C sous atmosphère d'argon sec. La dissolution de l'oxyde de plutonium est réalisée par carbochloration. Un barbotage de chlore à raison de 2 L/h est réalisé dans le mélange durant 45 minutes via un tube en carbone graphite et en présence de graphite au contact du mélange. Le réacteur est ensuite isolé sous atmosphère de chlore durant 24 heures à 710°C. Le chlore est enfin évacué par circulation d'argon sec. Une prise d'échantillon dans le bain montre une couleur bleue caractéristique du plutonium (III) dans le milieu comprenant un sel fondu.

La dissolution de l'oxyde de plutonium PuO₂ par carbochloration permet d'obtenir une solution de Pu(III) à 0,88% massique dans LiCl-CaCl₂.

On procède, ensuite, au barbotage d'argon humide à raison de 2 L/h pendant 5 heures au moyen d'un tube en carbone vitreux plongeant dans le milieu (l'argon humide étant de l'argon saturé en vapeur d'eau à température ambiante), moyennant quoi il se forme un précipité. Le précipité est récupéré par dissolution du milieu comprenant un sel précédemment fondu dans de l'acide nitrique 0,5 M et filtration. Le précipité ainsi récupéré est ensuite séché.

Le précipité isolé a ensuite été analysé par diffraction aux rayons X. Le diagramme obtenu indique que le précipité obtenu est composé exclusivement d'oxyde de plutonium PuO₂.

Durant la précipitation, deux prises d'échantillon ont été réalisées (respectivement après 1h et 5h de barbotage), dissoutes dans de l'acide nitrique filtré pour éliminer le procédé et analysées par spectrométrie et comptage α, de sorte à déterminer la concentration en plutonium (III) dans le sel.

| Durée de précipitation | Concentration en Pu(III) (mol/kg) | % de plutonium précipité |
|---|---|---|
| 0 | 3,7*10⁻² | - |
| 1 | 7,1*10⁻⁴ | 98,1 |
| 5 | 2,4*10⁻⁴ | 99,4 |

Après 5 heures de barbotage, le plutonium est incorporé à plus de 99% dans le précipité.

## Revendications

1. Procédé de fabrication d'un oxychlorure et/ou oxyde d'actinide(s) et/ou de lanthanide(s) à partir d'un chlorure d'actinide(s) et/ou de lanthanide(s) présent dans un milieu comprenant au moins un sel fondu du type chlorure, ledit procédé comprenant une étape de mise en contact dudit chlorure d'actinide(s) et/ou de lanthanide(s) présent dans ledit milieu comprenant au moins un sel fondu du type chlorure avec un gaz neutre humide.

2. Procédé selon la revendication 1, dans lequel le sel fondu du type chlorure est choisi parmi les chlorures de métal alcalin, les chlorures de métal alcalino-terreux et les mélanges de ceux-ci.

3. Procédé selon la revendication 1 ou 2, dans lequel le milieu comprenant au moins un sel fondu est un mélange de chlorure de lithium et de chlorure de calcium.

4. Procédé selon l'une quelconque des revendications précédentes, dans lequel le gaz neutre est un gaz rare.

5. Procédé selon l'une quelconque des revendications précédentes, dans lequel le gaz neutre est de l'argon.

6. Procédé selon l'une quelconque des revendications 1 à 5, dans lequel le gaz neutre est de l'azote.

7. Procédé selon l'une quelconque des revendications précédentes, dans lequel le ou les actinides est (sont) choisi(s) parmi l'uranium, le plutonium, le thorium, les actinides mineurs et les mélanges de ceux-ci.

8. Procédé selon l'une quelconque des revendications précédentes, dans lequel l'étape de mise en contact est réalisée par barbotage du gaz neutre humide dans le milieu comprenant au moins un sel fondu, dans lequel est inclus le chlorure d'actinide(s) et/ou de lanthanide(s).

9. Procédé selon l'une quelconque des revendications précédentes, comprenant, avant l'étape de mise en contact, une étape de préparation du milieu comprenant au moins un sel fondu, dans lequel est présent le chlorure d'actinide(s) et/ou de lanthanide(s).

10. Procédé selon l'une quelconque des revendications précédentes, comprenant, avant l'étape de mise en contact susmentionnée, une étape de préparation du gaz neutre humide.

11. Procédé selon l'une quelconque des revendications précédentes, comprenant, en outre, après l'étape de mise en contact susmentionnée, une étape d'isolement de l'oxychlorure et/ou oxyde formé.

## Patentansprüche

1. Verfahren zur Herstellung eines Oxychlorids und/oder Oxids von Actinoid(en) und/oder Lanthanoid(en) ausgehend von einem Chlorid von Actinoid(en) und/oder von Lanthanoid(en), das in einem Medium vorhanden ist, welches wenigstens ein geschmolzenes Salz vom Typ Chlorid enthält, wobei das Verfahren einen Schritt des Inkontaktbringens des Chlorids von Actinoid(en) und/oder von Lanthanoid(en), das in dem Medium vorhanden ist, welches wenigstens ein geschmolzenes Salz vom Typ Chlorid enthält, mit einem feuchten neutralen Gas umfasst.

2. Verfahren nach Anspruch 1, bei dem das geschmolzene Salz vom Typ Chlorid ausgewählt ist aus den Alkalimetallchloriden, den Erdalkalimetallchloriden und deren Mischungen.

3. Verfahren nach Anspruch 1 oder 2, bei dem das Medium, welches wenigstens ein geschmolzenes Salz enthält, eine Mischung aus Lithiumchlorid und Kalziumchlorid ist.

4. Verfahren nach einem der vorhergehenden Ansprüche, bei dem das neutrale Gas ein Edelgas ist.

5. Verfahren nach einem der vorhergehenden Ansprüche, bei dem das neutrale Gas Argon ist.

6. Verfahren nach einem der Ansprüche 1 bis 5, bei dem das neutrale Gas Stickstoff ist.

7. Verfahren nach einem der vorhergehenden Ansprüche, bei dem das oder die Actinoid(en) ausgewählt ist/sind aus Uran, Plutonium, Thorium, den niedrigen Actinoiden und deren Mischungen

8. Verfahren nach einem der vorhergehenden Ansprüche, bei dem der Schritt des Inkontaktbringens realisiert wird durch Sprühen des feuchten neutralen Gases in das Medium, welches wenigstens ein geschmolzenes Salz enthält, in dem das Chlorid von Actinoid(en) und/oder Lanthanoid(en) enthalten ist.

9. Verfahren nach einem der vorhergehenden Ansprüche, umfassend vor dem Schritt des Inkontaktbringens einen Schritt des Herstellens des Mediums, welches wenigstens ein geschmolzenes Salz enthält, in dem das Chlorid von Actinoid(en) und/oder Lanthanoid(en) vorhanden ist.

10. Verfahren nach einem der vorhergehenden Ansprüche, umfassend vor dem genannten Schritt des Inkontaktbringens einen Schritt der Herstellung des feuchten neutralen Gases.

11. Verfahren nach einem der vorhergehenden Ansprüche, ferner umfassend, nach dem genannten Schritt des Inkontaktbringens, einen Schritt des Isolierens des gebildeten Oxychlorids und/oder Oxids.

## Claims

1. Process of manufacturing an oxychloride and/or oxide of actinide(s) and/or of lanthanide(s) from a chloride of actinide(s) and/or of lanthanide(s) present in a medium comprising at least one molten salt of the chloride type, said process comprising a step of bringing said chloride of actinide(s) and/or lanthanide(s) present in said medium comprising at least one molten salt of chloride type into contact with a wet inert gas.

2. Process according to claim 1, in which the molten salt of chloride type is selected from alkali metal chlorides, alkaline earth metal chlorides and mixtures thereof.

3. Process according to claim 1 or 2, in which the medium comprising at least one molten salt is a mixture of lithium chloride and calcium chloride.

4. Process according to any of the preceding claims, in which the inert gas is a noble gas.

5. Process according to any of the preceding claims, in which the inert gas is argon.

6. Process according to any of claims 1 to 5, in which the inert gas is nitrogen.

7. Process according to any of the preceding claims, in which the actinide(s) is (are) selected from uranium, plutonium, thorium, minor actinides and mixtures thereof.

8. Process according to any of the preceding claims, in which the step of bringing into contact is carried out by bubbling wet inert gas in the medium comprising at least one molten salt, in which is included the chloride of actinide(s) and/or of lanthanide(s).

9. Process according to any of the preceding claims, comprising, before the step of bringing into contact, a step of preparing the medium comprising at least one molten salt, in which is present the chloride of actinide(s) and/or of lanthanide(s).

10. Process according to any of the preceding claims, comprising, before the aforementioned step of bringing into contact, a step of preparing the wet inert gas.

11. Process according to any of the preceding claims, further comprising, after the aforementioned step of bringing into contact, a step of isolating the oxychloride and/or oxide formed.
